**Europäisches Patentamt**

**European Patent Office**

**Office européen des brevets**

(11) Veröffentlichungsnummer: **0 297 289 B1**

## (12) EUROPÄISCHE PATENTSCHRIFT

(45) Veröffentlichungstag der Patentschrift:
31.07.91 Patentblatt 91/31

(51) Int. Cl.$^5$: **F16D 43/20**

(21) Anmeldenummer: **88108566.6**

(22) Anmeldetag: **28.05.88**

(54) Sicherheitskupplung.

(30) Priorität: **27.06.87 DE 3721292**

(43) Veröffentlichungstag der Anmeldung:
**04.01.89 Patentblatt 89/01**

(45) Bekanntmachung des Hinweises auf die
Patenterteilung:
**31.07.91 Patentblatt 91/31**

(84) Benannte Vertragsstaaten:
**BE FR GB IT NL**

(56) Entgegenhaltungen:
**DE-C- 85 997**
**DE-C- 94 535**
**DE-C- 98 233**
**US-A- 2 313 708**

(73) Patentinhaber: **SIEBTECHNIK GMBH**
**Platanenallee 46**
**W-4330 Mülheim/Ruhr (DE)**

(72) Erfinder: **Dietschreit, Horst**
**Hagdorn 1 A**
**W-4330 Mülheim-Ruhr (DE)**

(74) Vertreter: **Sroka, Peter-Christian, Dipl.-Ing.**
**Dominikanerstrasse 37 Postfach 111038**
**W-4000 Düsseldorf 11 (DE)**

## Beschreibung

Die Erfindung betrifft eine Sicherheitskupplung mit einem ersten An- Abtriebselement, das über eine gegen Federkraft bei einem vorgegebenen Drehmoment ausrückende Kuppelvorrichtung mit einem koaxial angeordneten zweiten An- Abtriebselement verbunden ist, wobei am ersten An- Abtriebselement mindestens zwei Anschläge fest angeordnet sind und am zweiten An- Abtriebselement um senkrecht zur Drehachse liegende Schwenkachsen schwenkbare, als zweiarmige Hebel ausgebildete Kuppelorgane angeordnet sind, die jeweils am ersten Hebelarm angeordnete Gegenanschläge aufweisen, an denen in der Einrückposition die Anschläge des ersten An- Abtriebselements anliegen, während der zweite Hebelarm in der Einrückposition unter einem spitzen Winkel zu einer Stützplatte steht und an dieser Stützplatte abgestütz ist, welche senkrecht zur Drehachse am zweiten An- Abtriebselement angeordnet ist und sowohl in der Einrückposition als auch in der Ausrückposition der Kuppelvorrichtung gegen einen Endanschlag anliegt und in axialer Richtung aus der Einrückposition durch Verschwenkung der Hebel gegen die Federkraft in eine Ausrückposition verschiebbar ist, in welcher die Hebel in eine Position geschwenkt sind, in der die Gegenanschläge außerhalb der Bewegungsbahn der Anschläge liegen.

Derartige Sicherheitskupplungen sind an sich bekannt (siehe DE-C-85997). Sie haben die Aufgabe, Maschinen durch Begrenzen des übertragbaren Drehmomentes vor Überlastung zu schützen und Beschädigungen an Werkzeugen und Werkstücken zu verhindern. Sie werden im allgemeinen an der Stelle eines Wellenstranges eingebaut, an der bei plötzlichen Lastverzögerungen das höchste Drehmoment auftritt.

Bei der in DE-C-85997 beschriebenen Sicherheitskupplung ist der Endanschlag, gegen den die federbelastete Stützplatte anläuft, nicht verstellbar. Dies hat zur Folge, daß das Schaltdrehmoment der Kupplung nicht einstellbar ist. Weiterhin können im ausgerasteten Zustand die Hebel gegen die mit anderer Geschwindigkeit umlaufende andere Kupplunghälfte schlagen. Schließlich müssen für das Herstellen der erneuten Betriebsbereitschaft alle Anschlagwinkel gelöst und heraus geschwenkt und später erneut justiert werden. Hiermit ist ein hoher Aufwand verbunden. Bei einer weiteren in US-A- 2313708 beschriebenen Kupplung besitzt die Abstützplatte keinen Endanschlag, so daß die für den Grenzfall gewählte Federkraft jederzeit in voller Höhe auf die Schaltelemente einwirkt.

Bei einer weiteren bekannten Ausführungsform einer Sicherheitskupplung, die auch als "Freischaltkupplungen" bezeichnet werden, sind die beiden An- Abtriebselemente über eine Kuppelvorrichtung verbunden, welche eine Reihe von Kugeln aufweist, die am Umfang eines mit dem einen An- Abtriebselement verbundenen Kugelkäfigs angeordnet sind. Die Kugeln stehen unter der Einwirkung einer Druckscheibe, auf die die Kraft dieser Tellerfeder wirkt, und werden durch die Kraft dieser Tellerfeder teilweise aus dem Kugelkäfig hinaus und in Kalotten hineingedrückt, die an einem Flanschring angeordnet sind, der mit dem anderen An- Abtriebselement verbunden ist. Bei Überschreitung eines vorgegebenen Maximaldrehmomentes, das durch die Kraft der Tellerfeder bestimmt ist, werden die Kugeln aus ihren Kalotten herausgedrückt und gegen die Kraft der Tellerfeder verschoben. In diesem Zustand ist die Kupplung ausgerückt und verbleibt unter der Wirkung einer Rastmechanik in diesem Zustand. Ein Nachteil dieser bekannten Freischaltkupplung besteht darin, daß auch bei ausgerückter Kupplung aufgrund der zwischen dem Flanschring und der Druckscheibe angeordneten Kugeln ein Reibmoment übertragen wird und an dieser Stelle ein erheblicher Materialverschleiß auftritt. Dies ist vor allem dann außerordentlich nachteilig, wenn die Sicherheitskupplung an Maschinen verwendet werden soll, die nach dem Ausrücken der Kupplung und dem Abschalten der Maschine noch eine lange Nachlaufzeit aufweisen.

Die der Erfindung zugrundeliegende Aufgabe bestand darin, eine als Freischaltkupplung wirkende Sicherheitskupplung der oben genannten Bauart zu schaffen, bei der im ausgerückten Zustand nur noch ein möglichst geringes Reibmoment auftritt und insbesondere die Kuppelvorrichtung selbst keinen Verschleiß bewirkenden Reibungskräften mehr ausgesetzt ist und die blecht in den eingerückten Zustand rücksetzbar ist.

Die Lösung dieser Aufgabe erfolgt erfindungsgemäß mit den Merkmalen aus dem kennzeichnenden Teil des Patentanspruches 1.

Vorteilhafte Weiterbildungen der erfindungsgemäßen Sicherheitskupplung sind in den Unteransprüchen beschrieben.

Wie weiter unten anhand eines Ausführungsbeispiels beschrieben wird, löst die erfindungsgemäße Sicherheitskupplung nicht nur die gestellte Aufgabe, indem sie eine echte Freischaltkupplung darstellt, bei der im ausgerückten Zustand die Kuppelorgane vollständig freigegeben sind und keine Verschleiß bewirkenden Kräfte mehr auf- sie einwirken, sondern sie hat auch noch weitere Vorteile. Es läßt sich bei dieser Sicherheitskupplung durch entsprechende Bemessung und Anordnung der Kuppelorgane erreichen, daß die Kuppelorgane nicht ständig mit der vollen Vorspannkraft belastet sind, sondern lediglich mit der aus dem jeweiligen übertragenen Drehmoment resultierenden Kraft. Weiterhin läßt sich erreichen, daß auf die An- Abtriebselemente wirkende Radialbelastungen, die beispielsweise bei der Verwendung von Riemenscheiben auftreten, keinen Einfluß auf

2

die Funktionsweise der Kuppelorgane bzw. die Einstellung des maximalen Drehmomentes, bei dem die Kupplung ausrückt, haben.

Im folgenden wird anhand der beigefügten Zeichnungen ein Ausführungsbeispiel für eine Sicherheitskupplung nach der Erfindung näher erläutert. In den Zeichnungen zeigen :

Fig. 1      einen Längsschnitt durch eine Sicherheitskupplung ;
Fig. 2      in einer Seitenansicht die Kupplung nach Fig. 1 im eingerückten Zustand ;
Fig. 3      in einer Darstellung analog Fig. 2 die Kupplung nach Fig. 1 während des Ausrückvorganges ;
Fig. 4      in einer Darstellung analog Fig. 2 die Kupplung nach Fig. 1 im ausgerückten Zustand.

Die in den Zeichnungen dargestellte Sicherheitskupplung besitzt ein scheibenartig ausgebildetes erstes An- Abtriebselement 1, das über Kugellager 3 auf einem als Welle ausgebildeten zweiten An- Abtriebselement 2 gelagert ist. Die beiden An- Abtriebselemente 1 und 2 sind koaxial zueinander angeordnet und um eine gemeinsame Drehachse D verdrehbar. Das zweite An- Abtriebselement 2 besitzt im Bereich unmittelbar vor dem ersten An- Abtriebselement 1 eine Verbreiterung 2.1, durch welche ein Bolzen 8 senkrecht zur Drehachse D hindurchgeführt ist. An den beiden Enden des Bolzens 8 sind um die Achse S des Bolzens 8 schwenkbare zweiarmige Hebel 6 und 7 gelagert. Diese zweiarmigen Hebel 6 und 7 stellen die Kuppelorgane der Kupplung dar. Hierzu sind die in Richtung auf das erste An- Abtriebselement 1 weisenden Hebelarme 6.1 und 7.1 mit Gegenanschlägen versehen, die mit Anschlägen zusammenwirken, welche als in axialer Richtung weisende Vorsprünge an der Seitenfläche des ersten An- Abriebselements 1 angeordnet sind.

Unter einem vorgegebenen stumpfen Winkel zu diesen ersten Hebelarmen 6.1 bzw. 7.1 besitzen die Hebel 6 und 7 zweite Hebelarme 6.2 und 7.2. Diese zweiten Hebelarme 6.2 und 7.2 liegen an einer Stützplatte 9 an, die an der vom ersten An- Abtriebselement 1 abgewandten Seite der Verbreiterung 2.1 den zweiten An- Abtriebselementes 2 angeordnet ist, und von einer koaxial zur Drehachse D angeordneten Schraubendruckfeder 10 unter einer in Richtung auf die Hebel 6 und 7 wirkenden Kraft steht. Die Schraubendruckfeder 10 stützt sich dabei mit ihrem von dem Hebeln 6 und 7 abgewandten Ende an einem Federwiderlager 11 ab, das mittels einer Kontermutter 12 auf dem vom ersten An- Abtriebselement 1 abgewandten Teil 2.2 des zweiten An- Abtriebselements 2 festgelegt ist.

Die Stützplatte 9 ist mit einer Führungshülse 9.1 verbunden, die über ein Gleitlager 9.2 am Mittelabschnitt des zweiten An- Abtriebselements 2 anliegt und auf diesem verschiebbar ist. Weiterhin ist zwischen der Stützplatte 9 und der Verbreiterung 2.1 des zweiten An- Abtriebselementes 2 eine Schraubenmutter 13 angeordnet, die einerseits als Anschlag für die Stützplatte 9 dient und durch deren Verdrehen die Stützplatte 9 in Richtung entgegen der Kraft der Schraubendruckfeder 10 verschoben werden kann.

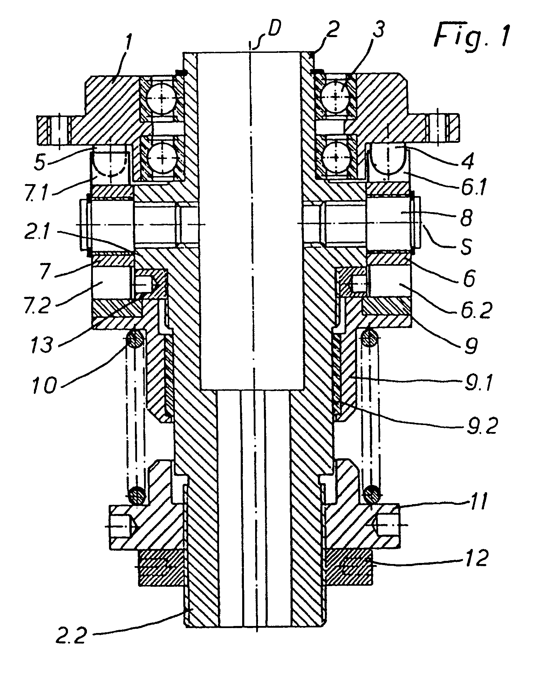

Die Wirkungsweise in den Figuren 1 bis 4 dargestellten Sicherheitskupplung ist folgende.

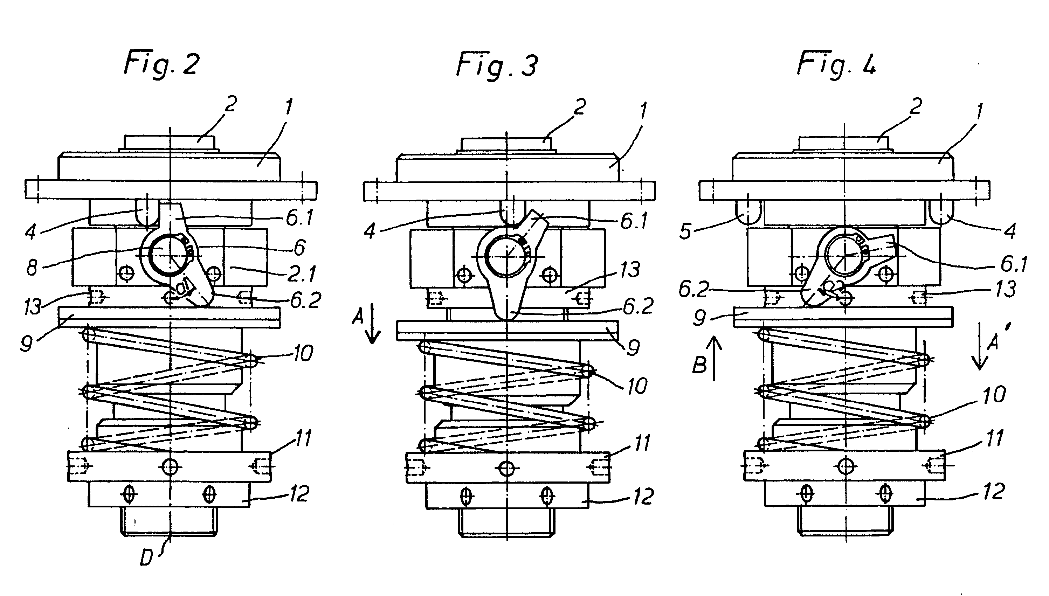

In dem in Figur 2 dargestellten eingerückten Zustand der Kupplung liegen die Anschläge 4 und 5 an den als Gegenanschläge ausgebildeten ersten Hebelarmen 6.1 und 7.1 an, die zweiten Hebelarme 6.2 und 7.2 werden an die Stützplatte 9 angedrückt und stehen zu dieser Stützplatte unter einem spitzen Winkel al gegen die Normale auf die Oberfläche der Stützplatte 9. Die Stützplatte 9 steht unter der Kraft der Schraubendruckfeder 10 und wird durch diese an die Schraubenmutter 13 angedrückt. Die von der Schraubendruckfeder 10 auf die Stützplatte 9 ausgeübte Kraft ist einstellbar durch die Lage des Federwiderlagers 11 auf dem hinteren Abschnitt 2.2 des zweiten An- Abtriebselementes 2.

Die auf die ersten Hebelarme 6.1 und 7.1 wirkenden Kräfte sind bestimmt durch das zu übertragende Drehmoment. Die Kupplung bleibt in dem in Figur 2 dargestellten eingerückten Zustand, in welchem das Drehmoment vom ersten An- Abtriebselement 1 über die Hebel 6 und 7 auf das zweite An- Abtriebselement 2 übertragen wird, solange die auf die ersten Hebelarme 6.1 und 7.1 einwirkenden Kräfte nicht ausreichen, um über die zweiten Hebelarme 6.2 und 7.2 die Stützplatte 9 gegen die Kraft der Schraubendruckfeder 10 zu verschieben.

Dies geschieht erst dann, wenn wie in Figur 3 ein überlastungsfall eintritt, in dem beispielsweise an einem der beiden An- Abtriebselemente ein unzulässig hoher Widerstand auftritt, und das zu übertragende Drehmoment größer wird, so daß die Hebel 6 und 7 wie in Figur 3 dargestellt im Uhrzeigersinn verschwenkt werden, wobei sich die Stützplatte 9 in Richtung A gegen die Kraft der Schraubendruckfeder 10 verschiebt. Die Verschwenkung der beiden Hebel 6 und 7 erfolgt hierbei in zwei Bewegungsabschnitten. Im ersten Bewegungsabschnitt erfolgt die Verschwenkung unter Verschiebung der Stützplatte 9 in Richtung A gegen die Kraft der Schraubendruckfeder 10 bis zu einem Punkt, in dem die zweiten Hebelarme 6.2 und 7.2 unter dem Winkel 0° gegen die Normale auf die Stützplatte 9 an dieser Stützplatte anliegen. Dieser Zustand ist in Figur 3 dargestellt. Bei einer noch weiteren Verschwenkung der Hebel 6 und 7 im Uhrzeigersinn beginnt ein zweiter Bewegungsabschnitt, in dem wie aus Figur 4 ersichtlich die weitere Verschwenkung unter der Einwirkung der Kraft der Schraubendruckfeder 10 und einer entsprechenden Bewegung der Stützplatte 9 in Pfeilrichtung B erfolgt. Dies

3

hat zur Folge, daß die Hebel 6 und 7 schließlich in die in Figur 4 dargestellte Stellung einrasten, in der die ersten Hebelarme 6.1 und 7.1 vollständig aus der Bewegungsbahn der Anschläge 4 und 5 herausgeführt sind. In diesem Zustand stehen die zweiten Hebelarme 6.2 und 7.2 unter einem spitzen Winkel a2 zur Normalen auf die Stützplatte 9 und liegen an dieser an. Die Stützplatte 9 ist inzwischen aber wieder in ihre Ausgangstellung zurückgekehrt und liegt ihrerseits an der Schraubenmutter 13 an. In dem in Figur 4 dargestellten Zustand ist die Kupplung ausgerückt und das An- Abtriebselement 1 kann sich frei gegenüber dem An- Abtriebselement 2 verdrehen, ohne daß eine nennenswerte Reibung, die zum Verschleiß führen könnte, auftritt.

Der in Figur 2 dargestellte eingerückte Zustand, sowie der in Figur 4 dargestellte ausgerückte Zustand, sind beides stabile Zustände, da in beiden Zuständen die Stützplatte 9 unter der Kraftwirkung der Schraubendruckfeder 10 an der Schraubenmutter 13 fest anliegt.

Das Rücksetzen der Sicherheitskupplung aus dem in Figur 4 dargestellten ausgerückten Zustand in den in Figur 2 dargestellten eingerückten Zustand erfolgt, indem bei stillstehenden An- Abtriebselementen die Schraubenmutter 13 derart verdreht wird, daß sich die Stützplatte 9 in Pfeilrichtung A' (Figur 4) verschiebt. Sobald die Verschiebungsstrecke einen gewissen vorgegebenen Wert erreicht hat, können die Hebel 6 und 7 von Hand in die in Figur 2 dargestellte Stellung zurückgeschwenkt werden. Die Schraubenmutter 13 wird dann in der entgegengesetzten Richtung wieder so lange verdreht, bis auch die Stützplatte 9 die in Figur 2 dargestellte Stellung wieder erreicht hat, in der die zweiten Hebelarme 6.2 und 7.2 an der Stützplatte 9 anliegen. Die Kupplung ist nun wieder eingerückt.

Da die Anschläge 4 und 5 und die als Kuppelorgane wirkenden Gegenanschläge 6.1 und 7.1 beim Ausrücken der Kupplung eine quasi scherenartige Bewegung gegeneinander ausführen, kann die in den Figuren 1 bis 4 dargestellte Sicherheitskupplung in Form einer Freischaltkupplung auch als "Scherenkupplung" bezeichnet werden.

## Patentansprüche

1. Sicherheitskupplung mit einem ersten An- Abtriebselement (1), das über eine gegen Federkraft bei einem vorgegebenen Drehmoment ausrückende Kuppelvorrichtung mit einem koaxial angeordneten zweiten An-Abriebselement (2) verbunden ist, wobei am ersten An- Abriebselement (1) mindestens zwei Anschläge (4 ; 5) fest angeordnet und am zweiten An- Abtriebselement (2) um senkrecht zur Drehachse (D) liegende Schwenkachsen (S) schwenkbare, als zweiarmige Hebel (6 ; 7) ausgebildete Kuppelorgane angeordnet sind, die jeweils am ersten Hebelarm angeordnete Gegenanschläge (6.1 ; 7.1) aufweisen, an denen in der Einrückposition die Anschläge (4 ; 5) des ersten An- Abtriebselements (1) anliegen, während der zweite Hebelarm in der Einrückposition unter einem spitzen Winkel zu einer Stützplatte (9) steht und an dieser Stützplatte abgestützt ist, welche senkrecht zur Drehachse (D) am zweiten An- Abtriebselement (2) angeordnet ist und sowohl in der Einrückposition als auch in der Ausrückposition der Kuppelvorrichtung gegen einen Endanschlag (13) anliegt und in axialer Richtung aus der Einrückposition durch Verschwenkung der Hebel (6 ; 7) gegen die Federkraft (Druckfeder (10)) in eine Ausrückposition verschiebbar ist, in welcher die Hebel (6 ; 7) in eine Position geschwenkt sind, in der die Gegenanschläge (6.1 ; 7.1) außerhalb der Bewegungsbahn der Anschläge (4, 5) liegen, dadurch gekennzeichnet, daß der Endanschlag durch eine Schraubenmutter (13) gebildet ist, die auf ein Außengewinde des zweiten An- Abtriebselements (2) aufgeschraubt ist, derart daß die Hebel (6 ; 7) bei stillstehenden An- Abtribselementen (1, 2) nach Verschrauben der Schraubenmutter (13) in die Einrückposition rückschwenkbar sind.

2. Sicherheitskupplung nach Anspruch 1, dadurch gekennzeichnet, daß das zweite An- Abtriebselement (2) in seinem unmittelbar dem ersten An- Abtriebselement (1) gegenüberliegenden Bereich eine Verbreiterung (2.1) aufweist, durch die ein die Schwenkachse (S) bildender Bolzen (8) senkrecht zur Drehachse (D) hindurchgeführt ist.

3. Sicherheitskupplung nach Anspruch 1 oder 2, dadurch gekennzeichnet, daß die Stützplatte (9) relativ zu der bzw. den Schwenkachsen (S) in axialer Richtung beweglich ist.

4. Sicherheitskupplung nach einem der Ansprüche 1 bis 3, bei der die Druckfeder eine koaxial zur Drehachse (D) angeordnete Schraubenfeder (10) ist, die sich mit ihrem einen Ende an einem Federlager abstützt, das mittels einer Kontermutter (12) auf dem zweiten An- Abtriebselement (2) festgelegt ist, dadurch gekennzeichnet, daß die Druckfeder mit ihrem zweiten Ende an der Stützplatte abgestützt ist.

5. Sicherheitskupplung nach Anspruch 4, dadurch gekennzeichnet, daß die Stützplatte (9) an einer Führungshülse (9.1) abgestützt ist, die über ein Gleitlager (9.2) am Mittelabschnitt des zweiten An- Abtriebselements (2) anliegt und auf diesem verschiebbar ist.

6. Sicherheitskupplung nach Anspruch 1, dadurch gekennzeichnet, daß das erste An- Abtriebselement (1) auf dem als Welle ausgebildeten zweiten An- Abtriebselement (2) drehbar gelagert ist.

**Claims**

1. Safety coupling having a first drive/driven element (1), which is connected by way of a coupling device, which disengages against spring force in the event of a predetermined torque, to a coaxially disposed second drive/driven element (2), wherein at least two stops (4 ; 5) are fixedly disposed on the first drive/driven element (1) and on the second drive/driven element (2) there are disposed coupling members, which are pivotable about pivot axes (S) perpendicular to the axis of rotation (D) and are in the form of two-armed levers (6 ; 7), which members each have counter-stops (6.1 ; 7.1) on the first lever arm, against which the stops (4 ; 5) of the first drive/driven element (1) abut in the engaged position, while in the engaged position the second lever arm is at an acute angle to a support plate (9) and rests on this support plate, which is disposed perpendicular to the axis of rotation (D) on the second drive/driven element (2) and abuts, both in the engaged position and in the disengaged position of the coupling device, against an end stop (13) and is displaceable in an axial direction from the engaged position by pivoting the levers (6 ; 7) against the spring force (compression spring (10)) into a disengaged position, in which the levers (6 ; 7) are pivoted into a position in which the counter-stops (6.1 ; 7.1) lie outside the path of motion of the stops (4, 5), characterised in that the end stop is formed by a screw nut (13), which is screwed on to an external thread of the second drive/driven element (2) in such a way that, when the elements (1, 2) are stationary, the levers (6 ; 7) can, once the screw nut (13) has been screwed, be pivoted back into the engaged position.

2. Safety coupling as in claim 1, characterised in that, in its region lying immediately opposite to the first drive/driven element (1), the second drive/driven element (2) has a broadened portion (2.1), through which a pin (8), which forms the pivot axis (S), is guided perpendicular to the axis of rotation (D).

3. Safety coupling as in claim 1 or 2, characterised in that the support plate (9) is moveable in the axial direction relative to the pivot axis or axes (S).

4. Safety coupling as in any one of claims 1 to 3, in which the compression spring is a helical spring (10), which is disposed coaxially to the axis of rotation (D) and which is supported at one of its ends on a spring bearing, which is fixed on the second drive/driven element (2) by means of a counter nut (12), characterised in that the compression spring rests at its other end on the support plate.

5. Safety coupling as in claim 4, characterised in that the support plate (9) rests on a guide sleeve (9.1), which abuts by way of a sliding bearing (9.2) against the central portion of the second drive/driven element (2) and is displaceable on it.

6. Safety coupling as in claim 1, characterised in that the first drive/driven element (1) is rotatably mounted on the second drive/driven element (2), which is in the form of a shaft.


**Revendications**

1. Accouplement de sécurité comportant un premier élément menant-mené (1) qui est relié à un second élément menant-mené (2), disposé coaxialement, par l'intermédiaire d'un dispositif d'accouplement, désaccouplant pour un couple prédéterminé à l'encontre de la force d'un ressort, deux butées au moins (4, 5) étant fixées sur le premier élément menant-mené (1) et des organes d'accouplement en forme de levier à deux bras (6, 7) étant montés pivotant autour d'axes de pivotement (S), perpendiculaires à l'axe de rotation (D), sur le second élément menant-mené (2), organes d'accouplement qui présentent chacun, sur le premier bras de levier, une contre-butée (6.1 ; 7.1) sur lesquelles s'appuient, dans la position de désaccouplement, les butées (4, 5) du premier élément menant-mené (1), pendant que le second bras de levier fait, dans la position de désaccouplement, un angle aigu par rapport à une plaque d'appui (9) sur laquelle il est en appui, plaque qui est disposée sur le second élément menant-mené (2) perpendiculairement à l'axe de rotation (D) et qui, aussi bien dans la position d'accouplement que dans la position de désaccouplement du dispositif d'accouplement, repose contre une butée d'extrémité (13) et peut s'écarter, en direction axiale, de la position d'accouplement, par pivotement des leviers (6 ; 7) à l'encontre de la force d'un ressort (ressort de pression 10) pour venir en position de désaccouplement, dans laquelle les leviers (6 ; 7) pivotent pour venir dans une position dans laquelle les contre-butées (6.1 ; 7.1) se trouvent en dehors de la trajectoire des butées (4, 5), caractérisé par le fait que la butée d'extrémité est formée par un écrou fileté (13) qui est vissé sur un filetage du second élément mentant-mené (2) de manière que les leviers (6, 7) puissent, alors que les éléments menants-menés (1, 2) sont au repos, revenir, après vissage de l'écrou fileté (13), dans la position d'accouplement.

2. Accouplement de sécurité selon la revendication 1, caractérisé par le fait que le second élément menant-mené (2) présente, dans sa zone opposée directement au premier élément de transmission (1), un élargissement (2.1) à travers lequel passe, perpendiculairement à l'axe de rotation (D), un boulon (8) formant l'axe de pivotement (S).

3. Accouplement de sécurité selon la revendication 1 ou 2, caractérisé par le fait que la plaque d'appui (9) est mobile en direction axiale par rapport à l'axe (aux axes) de pivotement (S).

4. Accouplement de sécurité selon l'une des revendications 1 à 3, dans lequel le ressort de pression est un ressort hélicoïdal (10) disposé coaxialement à l'axe de rotation (D) et qui s'appuie, par une de ses extrémités, contre une bride de ressort, fixée au second élément menant-mené (2) au moyen d'un contre-écrou (12), caractérisé par le fait que le ressort de pression s'appuie par sa seconde extrémité contre la plaque d'appui.

5. Accouplement de sécurité selon la revendication 4, caractérisé par le fait que la plaque d'appui (9) s'appuie contre un manchon de guidage (9.1) qui est appliqué, par l'intermédiaire d'un palier à glissement (9.2), contre une section moyenne du second élément menant-mené (2) et peut coulisser sur celle-ci.

6. Accouplement de sécurité selon la revendication 1, caractérisé par le fait que le premier élément menant-mené (1) est monté tournant sur le second élément menant-mené (2) réalisé sous forme d'arbre.

Fig. 1

# Fig. 2

# Fig. 3

# Fig. 4

EP 0 297 289 B1